Europäisches Patentamt

European Patent Office

Office européen des brevets

(11) Publication number: **0 440 590 A1**

# EUROPEAN PATENT APPLICATION

(21) Application number: 91850011.7

(51) Int. Cl.⁵: **B23Q 1/24**

(22) Date of filing: 16.01.91

(30) Priority: 31.01.90 SE 9000335

(43) Date of publication of application:
07.08.91 Bulletin 91/32

(84) Designated Contracting States:
BE CH DE ES FR GB IT LI

(71) Applicant: WELIN-BERGER, Guy
c/o Atlings Maskinfabrik AB
S-816 00 Ockelbo (SE)

(72) Inventor: WELIN-BERGER, Guy
c/o Atlings Maskinfabrik AB
S-816 00 Ockelbo (SE)

(74) Representative: Kierkegaard, Lars-Olov et al
H. ALBIHNS PATENTBYRA AB P.O. Box 3137
S-103 62 Stockholm (SE)

(54) A steady rest.

(57)    The present invention relates to a steady rest of the kind which includes a linearly movable slide (3), means for moving the slide in a first direction with a constant and determined force, two lever arms (1, 2) in mirror-symmetry in relation to its movement direction, each of the arms having a camming surface (11, 12) which coacts with a camming surface (9, 10) on the slide so as to pivot the arm around a pivot point (7, 8) during movement of the slide, and gripping devices (4-6) mounted on the forward ends of the slide and the two pivotable arms, as seen in the first direction, so as to grip workpieces of differing diameters centrally between the arms. According to the invention, in the non-loaded state of the steady rest, i.e. when no workpiece is held by the gripping devices, the gripping devices (4-6) are intended to be spaced from the centering point at a radial distance which is smaller than the radius of the workpiece to be gripped and at a distance which corresponds to the extent to which the slide and the arms are deformed when the steady rest is in a loaded state.

The invention also relates to a method for centering a workpiece gripped by such a steady rest around one and the same point, irrespective of the diameter of the workpiece.

EP 0 440 590 A1

FIG.1

# A STEADY REST

The present invention relates to a steady rest of the kind which includes a linearly movable slide, means for moving the slide in a first direction with a constant and determined force, two arms which are arranged on mutually opposite sides of the slide in relation to its direction of movement, said arms being mirror-symmetrical in relation to said first direction and each of said arms having a camming surface which coacts with a camming surface on the slide such as to pivot each of said arms around a pivot connection during movement of the slide, and gripping devices mounted on the forward ends of the slide and the two pivotal arms, as seen in the first movement direction, so as to hold workpieces of mutually different diameters centered between said arms.

In connection with steady rests of this kind, the invention also relates to a method of centering a workpiece gripped by the steady rest around one and the same point irrespective of the diameter of the workpiece.

A steady rest of this kind is known from Applicant's patent application WO 87/01320. This known steady rest is configured for workpieces of mutually different diameters and is constructed to decrease the variations in the force with which the workpieces are held. The force variations are significantly reduced with a steady rest of this kind, therewith enabling the steady rest to be used to hold workpieces of varying diameters with an acceptable gripping force and within a larger diameter range than was possible with earlier known steady rest constructions. This reduction in force variation has also been found to result in a decrease in the extent to which the centering point moves or shifts with workpieces of differing diameters.

Even though the difference between the positions of the centering points or workpieces of differing diameters is only in the order of thousands of a millimeter, it is desirable that this difference is zero.

The object of the present invention is to solve precisely this problem, by ensuring that when using a steady rest of the aforementioned kind the workpieces held by the steady rest will be centered around one and the same point, irrespective of the diameter of the workpiece concerned.

This object is achieved with a steady rest of the aforesaid kind which is characterized in that when in a non-loaded state, i.e. when the workpiece is not gripped by the gripping devices, said gripping devices are spaced from the centering point at a radial distance which is smaller than the radius of the workpiece to be gripped and at a distance which corresponds to the deformation of the slide and the arms in a loaded state, i.e. when a workpiece is held gripped between the three gripping means.

According to one advantageous variant of the invention, the gripping devices on the slide are intruded, in their non-loaded state, to be spaced from the centering point at a radial distance which is equal to the radius of the workpiece to be gripped, and the gripping devices on said arms are intended, in a non-loaded state, to be spaced from the centering point at a radial distance which is smaller than the radius of the workpiece to be gripped and at a distance which corresponds to the outward bending of the arms in their loaded state. This variant is based on the supposition that there is no change is slide deformation as a result of variation in the gripping force that occurs through the diametrical range of the steady rest. This assumption is fulfilled with those types of steady rests to which the invention pertains, since the reaction force of the gripping force on the slide acts in the direction in which the slide is most rigid or stiff. In the case of this variant of the invention, outward deflection or bendin of the arms can be readily calculated on the basis of measured values of deviations of the centering point position from an intended position of a conventional steady rest. This calculated outward bending of the arms is used as a measurement of the distance at which the gripping devices shall be located from the centering point in an inventive steady rest having the same dimensions and construction as the reference steady rest.

The present invention also relates to a method for centering a workpiece gripped by a steady rest of the aforesaid kind, irrespective of the diameter of the workpiece concerned. The inventive method is characterized by configuring the camming surfaces on the slide and arms in a manner such that, in the unloaded state, the arms of the gripping devices will be located radially within the circle on which the arms are tangential in their loaded state at a distance which corresponds to the deformation of the arms in said loaded state.

According to one advantageous variant of the inventive method, the aforesaid distance is determined by measuring the distance between the positions of the centering points in the non-loaded and loaded states of a conventional steady rest having the same dimensions but with the camming surfaces configured so that, in the unloaded state, the gripping devices on said slide and said arms will be spaced from the centering point at a distance equal to the radius of the workpiece to be gripped, and by calculating the outward bending of the arms as a function of the measured difference between said centering points, and using this difference as a measurement of the aforesaid distance.

An exemplifying embodiment of the inventive steady rest will now be described in greater detail with reference to the accompanying drawing, in which

Figure 1 illustrates a conventional steady rest of the kind known from WO 87/01320 ; and

Figure 2 illustrates schematically a method of calculating the outward bending of the arms on the basis of measured displacement of the arms from the intended centering point.

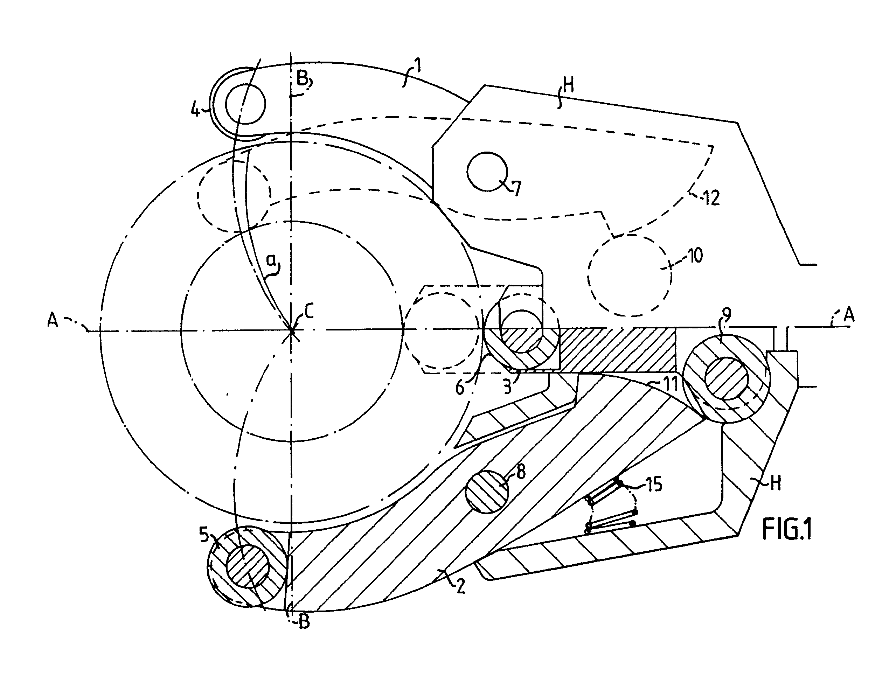

The steady rest illustrated in Figure 1 includes two mutually similar and pivotable lever arms 1, 2 which are mirror-symmetrical in relation to the intended centering point C, and a slide 3 which is linearly displaceable in a radial direction relative to the centering point and which is arranged symmetrically in relation to the lever arms. The arms and the slide carry respectively rotatable support rollers 4, 5 and 6 on those ends thereof which are intended to be urged against the workpiece. The arms are pivotally journalled on pivot pins 7, 8 carried by a schematically illustrated housing H, the forwardly located side surface of which is located on the same level as the pivot pins. This housing is suitably sealed against the surroundings, so that cuttings or the like are prevented from entering the housing.

In order to center a workpiece, the points of contact of respective support rollers 4, 5, 6 with the workpiece must always lie at the same radial distance from the centering point C. The support roller 6 can be moved linearly and its contact point will always lie on one and the same radius, which coincides with the steady rest symmetry axis A-A. The support rollers 4, 5 on the other hand, are movable in circular paths around respective pivot pins 7, 8, and consequently their contact points with the workpiece will lie on different radii which, when the arms are swung towards the centering point C, form a progressively larger angle with an axis B-B extending perpendicularly to the symmetry axis A-A. As illustrated schematically by the curve $a$ in Figure 1, when the arms are pivoted the contact points of the support rollers 4, 5 will move in a path which diverges progressively from the circular movement path described by the support rollers when coinciding with the centering point C. It will be understood that it is necessary for the circular paths described by the arms to pass through the centering point C.

Accordingly, the pivotal movement of the arms 1, 2 and the linear movement of the slide 3 must be coupled in a manner such that changes in the distance of the arm contact points from the centering point C, this distance being given by the curve $a$, is in agreement with the axial displacement of the slide 3.

To this end, there is provided on the distal end of the slide 3 relative to the centering point on both sides thereof a cam 9, 10 in the form of a rotatable roller, and the arms 1, 2 are provided on corresponding ends with mirror-image, curved cam followers 11, 12, which coact with the cams 9, 10 in a manner to pivot the arms through the angle which will provide a radius change that corresponds to the axial displacement of the slide. The aforesaid distal end of the slide is connected to force generating means, in some suitable manner. This force generating means preferably comprises a hydraulic or pneumatic piston-cylinder device of constant working pressure and the slide is connected to the displaceable part of said device. Other types of force generating means or connecting means are conceivable however.

The illustrated steady rest operates in the following manner. The workpiece is positioned between the two arms 1, 2, whereafter the force generating means is activated. It is assumed in the following that the force generating means is a hydraulic piston-cylinder device of constant working pressure.

When working pressure is applied to the piston-cylinder device, the slide 3 will move in a direction towards the centering point C. The cams 9, 10 are therewith also moved and the arms 1, 2 will pivot around the pivot pins 7, 8, due to the coaction of the cams with the cam followers 11, 12. When the support rollers 4, 5 on the arms 1, 2 come into abutment with the workpiece, the workpiece will be urged against the support roller 6, therewith preventing further linear movement of the slide.

In order to reduce variations in the clamping forces exerted by the support rollers on the workpiece, in comparison with another known type of steady rest in which the cam followers comprise rollers and the cams on the slide are curved, the cam followers 11, 12 are given a curved configuration on the distal ends of the arms 1, 2 on that side of said arms which faces towards the slide 3. This results in the transmission of force when the distance between the pivot centre of said arm and the contact point between cam follower and cam decreases upon inward movement of the slide towards the centering point. At the same time there is obtained an increase of that force component at said contact point which acts perpendicularly to a line which passes through the pivot centre and said contact point. These two factors counteract one another and the variation in clamping force therefore decreases in relation to the other type of known steady rest constructions. Because the camming curve is provided on the lever arm and accompanies said arm during its pivotal movement, the camming curve obtains a flatter form than if it were to move solely rectilinearly. This also contributes to favourable force transmission.

Despite the fact that the variation in clamping forces of a steady rest of this kind are relatively small, it is found that the centering point does not lie on one and the same location for workpieces of differing diameters. Applicant has realized that this must be due to the fact that the arms 1, 2 and the slide 3 are deformed differently when gripping workpieces of differing diameters and that this can be alleviated or remedied by configuring the camming curves 11, 12 on the lever arms in a manner which will compensate for the difference in deformation between the arms and the slide. More specifically, in accordance with the present invention, this compensation is provided in that when the steady rest is in a non-loaded state, i.e. when no workpiece is gripped between the support rollers 4-6, the pivotal movement of the arms is such that the peripheral surfaces of the support rollers 4 and 5 on respective arms are tangential to or touch upon a circle which, relative to the intended centering point C, lies inwardly of the circle on which the peripheral surface of respective support rollers 6 on the slide is tangential or touches, at a distance which corresponds to the difference in deformation between the arms and the slide.

Even though it is possible theoretically to calculate this difference, it is preferred to determine the difference on the basis of measured displacements from the intended centering point for a conventional steady rest according to Figure 1, in which the camming curves are configured so that, in the non-loaded state of the steady rest, the support rollers 4-6 will all be tangential to or touch upon the same circle described around the intended centering point. A purely theoretical calculation will namely include highly complicated factors, due to the many factors concerned, such as clamping force, the positions of the contact points (these positions also changing as a result of deformation), etc. which must be taken into account when determining the deformation undergone by the gripping devices.

The support rollers 4-6 of the steady rest illustrated in Figure 1 are made of mutually the same material and have mutually the same dimensions. In the case of the Figure 1 embodiment, the clamping force acts on the slide 3 in its axial direction, the slide being most rigid in this direction, and consequently the slide will not be subjected to deformation within the relative clamping force interval prevailing with workpieces of differing diameters within the diameter range for which the steady rest is dimensioned. It is mentioned in this connection that corresponding reasoning also applies to steady rests of other known kinds in which the camming curves are arranged on the slide, despite the fact that the deformations are greater in this instance, due to greater variations in clamping force. The total difference in deformation between slide and lever arms for each diameter of the workpiece can therefore be referred to the outward bending of the arms.

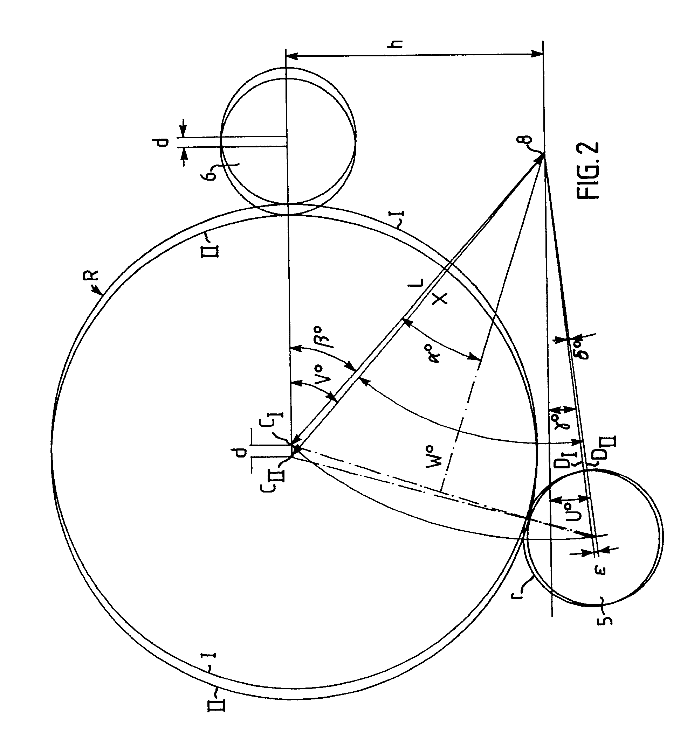

Figure 2 illustrates the geometric relationship between the measured displacement $\underline{d}$ of the centering point for a workpiece of radius R in relation to the intended centering point $C_I$, i.e. the point at which a workpiece having a radius which is equal to the smallest radius within the working range of a steady rest according to Figure 1 is centered.

Figure 2 illustrates with the aid of the circle I that position which a workpiece having the diameter R shall adopt in order to be centered around the intended centering point $C_I$, and with the aid of the circle II indicates the position adopted by the workpiece in reality when centered around the point $C_{II}$, due to outward bending of the lever arms of the steady rest. Corresponding positions are also shown for the support rollers 5 and 6. Since the lever arm 1 carrying the support roller 4 is symmetrical with the lever arm 2 the arm 1 bends outwardly is equal to the extent of the outward bending of the arm 2, and consequently only one arm is shown schematically in Figure 2 through its centre line $D_I$ and $D_{II}$ between the pivot point 8 and the centre point of the support roller 5 for an outwardly bent $D_{II}$ and a non-bent $D_I$ lever arm.

The reference $\underline{h}$ identifies the distance of the pivot point 8 of the arm from the symmetry line A-A of the steady rest (see Figure 1), the reference L identifies the length of the arm, the reference $\underline{x}$ identifies the distance between the pivot point 8 of said arm, and the centering point $C_{II}$, R is the radius of the workpiece, $\underline{r}$ is the radius of the support roller 5, $\underline{d}$ is the measured distance between the centering points $C_I$ and $C_{II}$, and $\epsilon$ is the distance between the centre points of the support roller in positions I and II.

The reference $\alpha$ is half the apex angle of the isosceles triangle that has its corners on the points $C_I$, the pivot point 8, and the centre point of the support roller 5 in the position I. The reference $\beta$ is the angle defined by the symmetry line of the steady rest with a line which passes through the pivot point 8 of the arm 2 and the point $C_I$.

The reference $\underline{v}$ is the angle defined by the symmetry line of the steady rest with a line which passes through the pivot point 8 of the arm and the point $C_{II}$.

The reference $\gamma$ is the angle defined by a line which passes through the pivot point 8 parallel with the symmetry line of the steady rest with the centre line $D_I$ of the arm when the arm is not bent outwardly.

The reference $\underline{w}$ is the angle defined by the centre line $D_{II}$ of the arm in an outwardly bent position with a line which passes through the points 8 and $C_{II}$.

The reference $\underline{u}$ is the angle defined by a line which passes through the pivot point 8, parallel with the symmetry line of the steady rest, with the centre line $D_{II}$ of the arm in the outwardly bent position of said arm.

Finally, the reference $\delta$ is the angle defined between the centre lines $D_I$, $D_{II}$ of the arm in the respective non-bent and bent positions of the arm.

Simple geometric observations will provide the following relationships :

$$\alpha = \arcsin \left( \frac{R+r}{2L} \right)$$

$$\beta = \arcsin \left( \frac{h}{L} \right)$$

$$\gamma = 2\,\alpha - \beta$$

$$v = \arcsin \left( \frac{h}{x} \right)$$

$$w = \arccos \left( \frac{x^2 + L^2 - (R + r)^2}{2xL} \right)$$

$$u = w - v$$

$$\delta = u - \gamma$$

$$x = \sqrt{\left(d + \sqrt{L^2 - h^2}\right)^2 + h^2}$$

$$\epsilon = \frac{\gamma}{180°} \cdot L \cdot \delta$$

It will be seen from this that the outward bending or deflection of the arms can be readily calculated as a function of the measured centre-point displacement of workpieces having differing diameters. When the value of the outward bending of the arms is known, it is a simple matter to calculate subsequently the camming curves on the lever arms (of the first type of steady rest) or on the slide (of the second type of steady rest) so that when the steady rest is in its non-loaded state the peripheral surfaces of the support rollers on said arms, for each workpiece diameter, will be tangential to or touch upon a circle which lies inwardly of the slide support roller periphery which is tangential to a circle having a radius corresponding to the radius of the workpiece at a distance which is equal to the extent to which the lever arms bend outwardly, determined in the aforesaid manner. Since the abovementioned first and second types of steady rest are of a known kind and the slide is activated with a constant force irrespective of workpiece diameter, it will understood that the aforesaid compensation for outward bending of the arms applies solely to compensated steady rests whose slides are activated with the same force as the reference steady rest, i.e. the steady rest used to determine centering point displacement.

As will be understood, however, the invention can also be applied with steady rests of another kind in which the slide is subjected to varying forces in order to achieve the desired clamping force. In this case, however, the compensation for outward bending of the arms will apply solely to steady rests whose gripping devices have the same clamping force as a referenced steady rest.

## Claims

1. A steady rest of the kind which includes a linearly movable slide (3), means for moving the slide in a first direction with a constant and determined force, two lever arms (1, 2) arranged on both sides of the slide in relation to its movement direction and arranged in mirror-symmetry in relation to said first direction, each of said arms having a camming surface (11, 12) which coacts with a camming surface (9, 10) on the slide so as to pivot the arm around a pivot point (7, 8) during movement of the slide, and gripping devices (4-6) mounted on the forward ends of the slide and the two pivotable arms, as seen in the first direction, so as to hold workpieces of differing diameters centrally between said arms, **characterized** in that in the non-loaded state of the steady rest, i.e. when no workpiece is held by the gripping devices, the gripping devices (4-6) are spaced from the centering point at a radial distance which is smaller than the radius of the workpiece to be gripped and at a distance which corresponds to the extent to which the slide and the arms are deformed when the steady rest is in a loaded state, i.e. when a workpiece is held between the three gripping devices.

2. A steady rest according to Claim 1, **characterized** in that in the non-loaded state of the steady rest the gripping devices (6) on said slide are spaced from the centering point at a radial distance which is equal to the radius (R) of the workpiece to be gripped ; and in that the gripping devices (4, 5) of the arms (1, 2), when the steady rest is in its non-loaded state, are intended to be spaced from the centering point at a radial distance which is smaller than the radius of the workpiece to be gripped and at a distance ($\epsilon$) which corresponds to the extent to which the arms are bent outwards in the loaded state of the steady rest.

3. In a steady rest of the kind which includes a linearly movable slide (3), means for moving the slide in a first direction with a constant and determined force, two lever arms (1, 2) arranged on both sides of the slide in relation to its movement direction and arranged in mirror-symmetry in relation to said first direction, each of said arms having a camming surface (11, 12) which coacts with a camming surface (9, 10) on the slide so as to pivot the arm around a pivot point (7, 8) during movement of the slide, and gripping devices (4-6) mounted on the forward ends of the slide and the two pivotable arms, as seen in the first direction, so as to hold workpieces of differing diameters centrally between said arms, a method of centering a workpiece gripped by the steady rest around one and the same point irrespective of the diameter of said workpiece, **characterized** by configuring the respective camming surfaces (9, 10 ; 11, 12) of the slide (3) and the arms (1, 2) in a manner such that in the non-loaded state of the steady rest, i.e. when no workpiece is held by the gripping devices, the gripping devices (4, 5) will be located radially inwards of the circle on which the devices are tangential in the loaded state of the steady rest, i.e. when a workpiece of given diameter is held between the gripping devices (4-6), at a distance ($\epsilon$) which corresponds to the extent to which the arms are bent outwardly in the loaded state of the steady rest.

4. A method according to Claim 3, **characterized** by determining the distance ($\epsilon$) which corresponds to outward bending of the arms in said loaded state with the aid of measured values of the displacement of said centering point in relation to a reference point of a similar, conventional steady rest whose camming surfaces are so configured that in the non-loaded of the steady rest the gripping devices on the slide and the arms will be tangential to a circle whose diameter is equal to the diameter of the workpiece to be held between the gripping devices.

FIG.1

EP 0 440 590 A1

FIG.2